# EUROPEAN PATENT APPLICATION

(11) **EP 4 672 429 A1**
(43) Date of publication of application: **31.12.2025**
(21) Application number: 25185500.3
(22) Date of filing: 26.06.2025
(51) Int. Cl.: H01M 10/613, H01M 50/289, H01M 50/211, H01M 10/658, H01M 10/6555, H01M 10/653

(54) **BATTERY MODULE PROVIDED WITH POUCH CELLS**

(30) Priority: 27.06.2024 IT 202400014863
(71) Applicant: FERRARI S.p.A., 41100 Modena (IT)
(72) Inventor: HAMZAJ, Ledjan, 41100 Modena (IT); LIGABUE, Elena, 41100 Modena (IT); POGGIO, Luca, 41100 Modena (IT); PULLARA, Calogero, 41100 Modena (IT); VENTURI, Enrico, 41100 Modena (IT); ZEVOLA, Francesco, 41100 Modena (IT)
(74) Representative: Studio Torta S.p.A.

(57) **Abstract**

A battery module (1) has a casing (19) defining a housing (24) delimited by a base wall (20), a front plate (25) and a back plate (26), opposed to each other along a longitudinal direction (2), two side plates (27), opposed to each other along a transverse direction (3), and a cover plate (28) spaced from the base wall (20) along a vertical direction (4); the housing (24) houses a plurality of pouch cells (5), arranged in a row along a transverse direction (3) and is subdivided into compartments (66) by partitions (40b) which are arranged between the pouch cells (5) along the transverse direction (3); each compartment (66) is gas-tightly insulated from the adjacent compartments (66) and defines an upward venting direction for the hot gases which are emitted, in use, by the pouch cells (5).

## Description

### Cross-reference to related applications

This patent application claims priority from Italian patent application no. 102024000014863 filed on June 27, 2024, the entire disclosure of which is incorporated herein by reference.

### Technical field

The present invention relates to a battery module, which includes a plurality of battery cells of the pouch type and is suitable for forming a battery pack consisting of several modules, in particular for the transport field, for example for electrically driven motor vehicles and hybrid thermal/electric drive motor vehicles.

### Background

As is known, in the electric or hybrid vehicles with battery packs, the latter are each formed by a plurality of electrical energy storage modules, usually referred to as "battery modules", arranged in positions close to each other within a housing structure. Each battery module, in turn, includes a casing and a plurality of battery cells, arranged in this casing in side-by-side positions. The poles of the battery cells, usually called "tabs", are then electrically connected to each other to provide the electrical voltage planned by design, at electrical terminals outside their casing.

The safety requirements are extremely strict and require adopting appropriate measures to limit as much as possible the propagation of any thermal instability along the battery cells of the same battery module. In particular, the need is felt to adopt measures aimed at limiting/preventing an increase in temperature and any gas emission from anyone of the battery cells from affecting the adjacent battery cells, to avoid a chain degeneration, with impairment of the functions and/or integrity of the entire battery module, and with risks of fire.

This need is particularly felt for battery cells of the pouch type (generally indicated by the term "pouch cells"). In fact, in the event of thermal instability, the pouch cells usually release hot gases along their edge, which is relatively long, in random positions. This gas venting can also cause self-ignition of flames along the same edge.

This behaviour, i.e. the venting of hot gases in random positions, increases the probability and speed of thermal propagation towards the adjacent pouch cells, and therefore makes it more difficult to meet the homologation requirements required by the current regulations for the electric and hybrid vehicles. From this point of view, in fact, the battery modules of known type are poorly satisfactory, as they cannot effectively manage the venting of hot gases.

For example, the casings of the battery module are closed and sealed at the top, so the hot gases tend to be trapped inside, and therefore tend to propagate relatively quickly between all the battery cells contained therein.

Aim of the present invention is, therefore, to meet the above need (i.e. to slow down as much as possible the propagation of thermal instabilities among the pouch cells) in a relatively simple and economical way, in order to meet the requirements required by the regulations on homologations and, more generally, in order to reduce as much as possible the risks of fire in the battery packs.

### Summary

According to the present invention there is provided a battery module as defined in claim 1.

The dependent claims relate to preferred embodiments of the present invention.

### Brief description of the drawings

For a better understanding of the present invention, a preferred embodiment is now described, by way of non-limiting example only, with reference to the accompanying drawings, in which:
- Figure 1 is a perspective view of the preferred embodiment of the battery module according to the present invention;

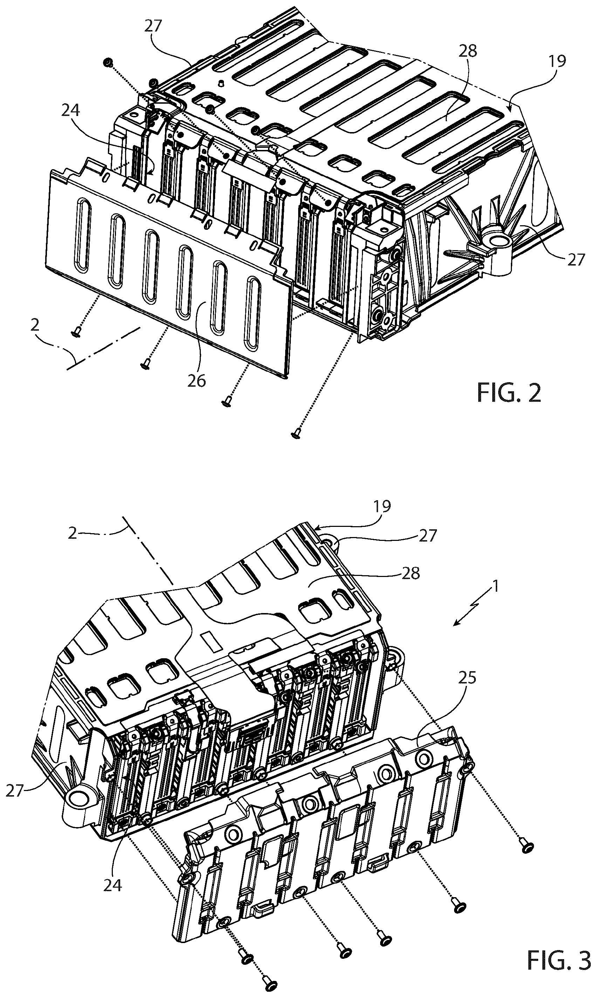

- Figures 2 to 5 are different partial perspective views of the battery module of Figure 1 and show some of its parts in an exploded view;

- Figure 6 shows a detail of the battery module of the present invention, in enlarged scale and in cross-section according to a substantially vertical sectional plane, identified by trace VI-VI in Figure 1;
- Figure 7 shows a detail of Figure 6, in perspective view from above, in a further enlarged scale, and sectioned according to a sectional plane parallel to the one of Figure 6; and
- Figures 8 and 9 show, respectively, two opposed longitudinal ends of the battery module, in perspective view, and sectioned according to a substantially horizontal sectional plane, identified by trace VIII-VIII in Figure 6.

### Description of embodiments

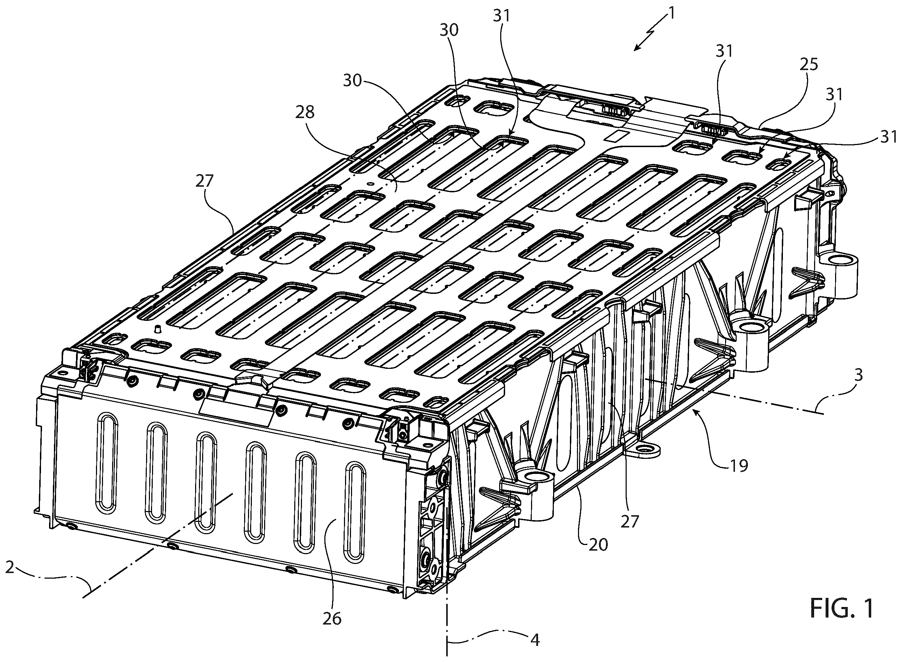

In Figure 1, reference number 1 denotes a battery module, which can be used to form a battery pack capable of delivering electrical energy for the traction of a vehicle, together with other battery modules (for example with the same dimension, shape and structure) arranged side by side.

The teachings below apply, in general, not only to the field of motor vehicles and the transport field, but to any application that has the need to store electricity, although the present description makes explicit reference to the vehicle example.

Therefore, by the term "battery module", here and in the following, is meant an energy storage element, which is able to store electrical energy, to deliver the stored electrical energy, and to be recharged (through appropriate systems, known and not described in detail).

The battery module 1 has a substantially parallelepiped external shape and extends along a longitudinal axis 2, a transverse axis 3 and a vertical axis 4, orthogonal to each other.

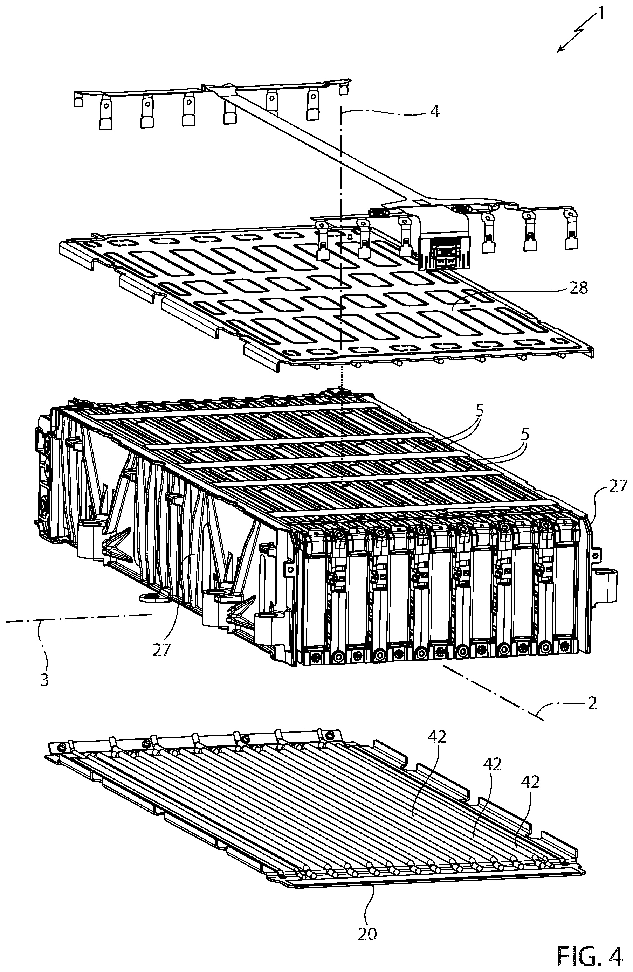

The battery module 1 comprises a plurality of battery cells, of the pouch type, commonly referred to by the terms "pouch cells" and identified by reference 5 in Figures 4-6. The pouch cells 5 are identical to each other (in structure, shape and dimension) and have an elongated shape, typical of this type of battery cells, with a main dimension, measured parallel to the longitudinal axis 2, greater than the other two dimensions, measured as height and thickness along the vertical axis 4 and the transverse axis 3, respectively.

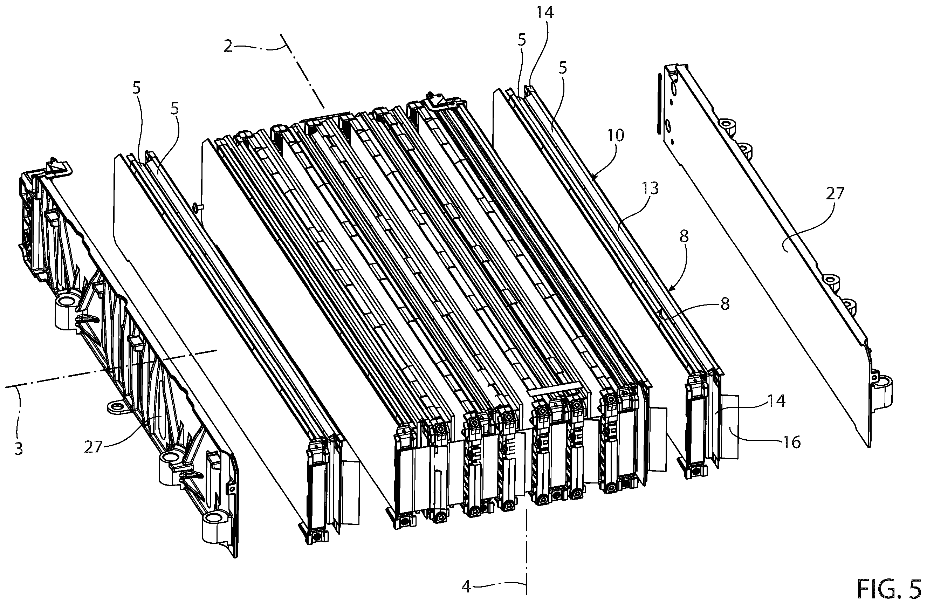

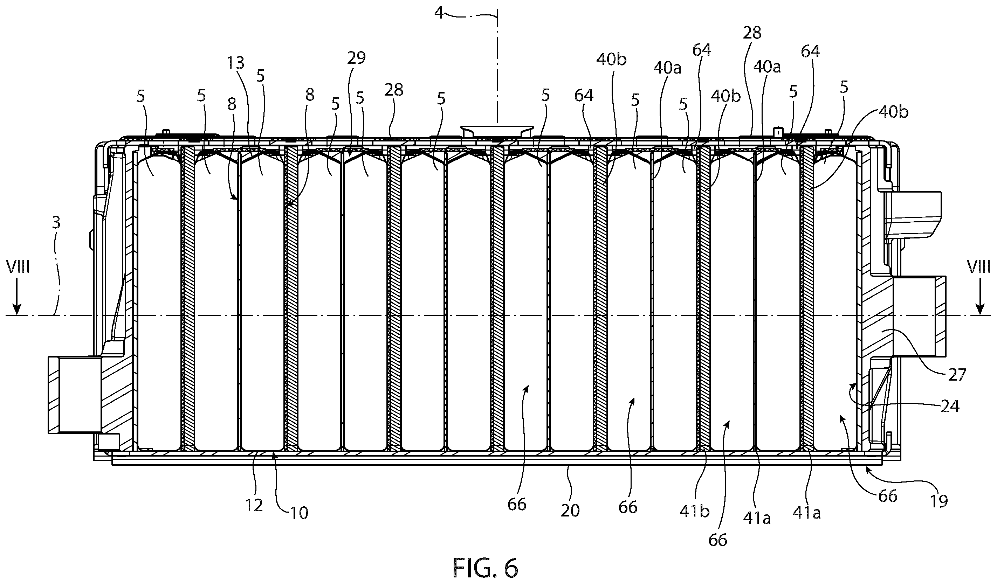

In more detail, with reference to Figures 5 and 6, each pouch cell 5 externally has two faces 8, which are opposed to each other and orthogonal with respect to the transverse axis 3, and are connected to each other by an edge perimeter region 10, consisting of a lower side 12 and an upper side 13, opposed to each other along the vertical axis 4, and of two end sides 14, opposed to each other along the longitudinal axis 2.

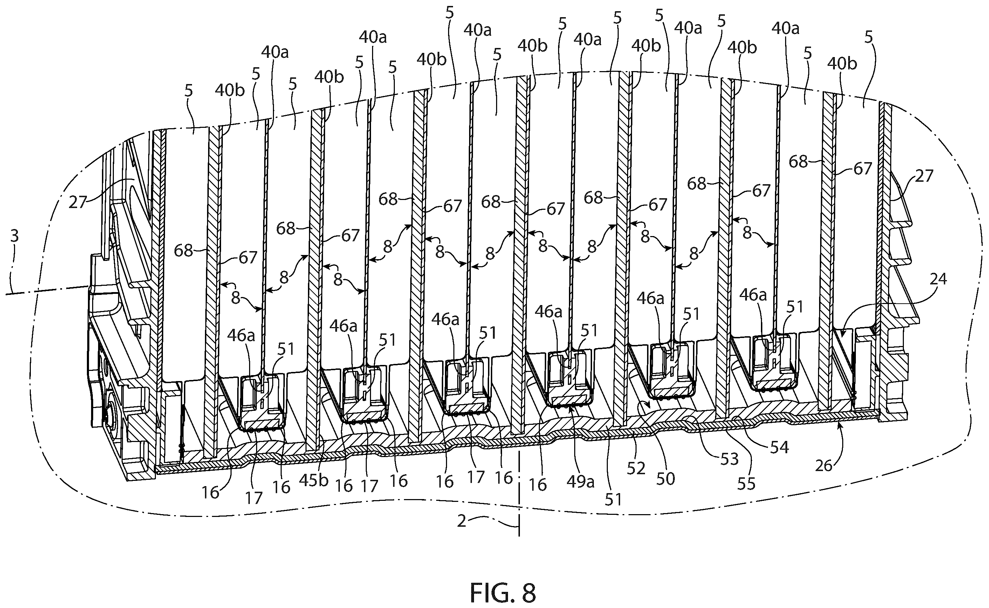

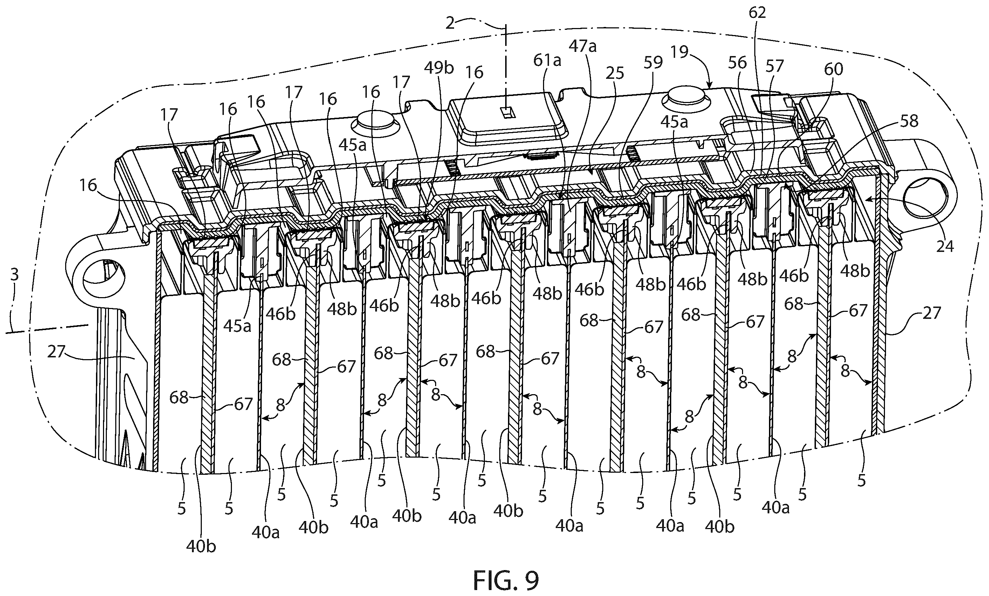

The pouch cells 5 are arranged in a row along the transverse axis 3, so that the faces 8 of each pouch cell 5 are facing the faces 8 of the adjacent pouch cells 5. At the opposed longitudinal ends, each pouch cell 5 ends with respective electric poles, defined by respective tabs 16. The latter are parallel to the vertical axis 4, longitudinally protrude from the respective end sides 14 and are bent or curved so as to have, each, a respective terminal portion 17 (Figures 8 and 9) which faces transversely and comes into electrical contact with the terminal portion 17 of an adjacent tab 16, to define an electrical connection in series. In practice, with such a connection in series, the pouch cells 5 form a sort of serpentine: at the opposed ends of this serpentine (Figure 8), the respective tabs 16 are then connected to respective electric poles of the battery module 1, in a known manner, not described in detail.

With reference to Figures 1 and 6, the battery module 1 also comprises a casing 19, in turn comprising a base wall 20, on which the lower sides 12 of the pouch cells 5 are arranged, and a perimeter wall, which extends upwards from a rectangular edge of the base wall 20 so as to define the contour of a housing 24, housing the set of pouch cells 5. This perimeter wall consists of four plates, coupled in fixed positions to the base wall 20 in a known manner, not described in detail, so as to ensure the tightness of the housing 24 along the perimeter of the base wall 20. These plates are defined by: a front plate 25 and a back plate 26, opposed to each other along the longitudinal axis 2; and two side plates 27, opposed to each other along the transverse axis 3. The coupling of the plates 25 and 26 to the plates 27 is of a known type, not described in detail, and is configured so as to ensure the tightness along the vertical edges of the housing 24.

The plates 27 are parallel to each other and orthogonal to the transverse axis 3 and are arranged so as to exert a compressive action on the pouch cells 5 along the transverse axis 3, i.e. towards the faces 8.

The casing 19 further comprises a cover plate 28, which closes an upper opening of the housing 24 and is coupled to an upper edge of the plates 25, 26, 27, in a known manner, not described in detail (for example, so as to ensure the tightness of the housing 24 along said upper edge).

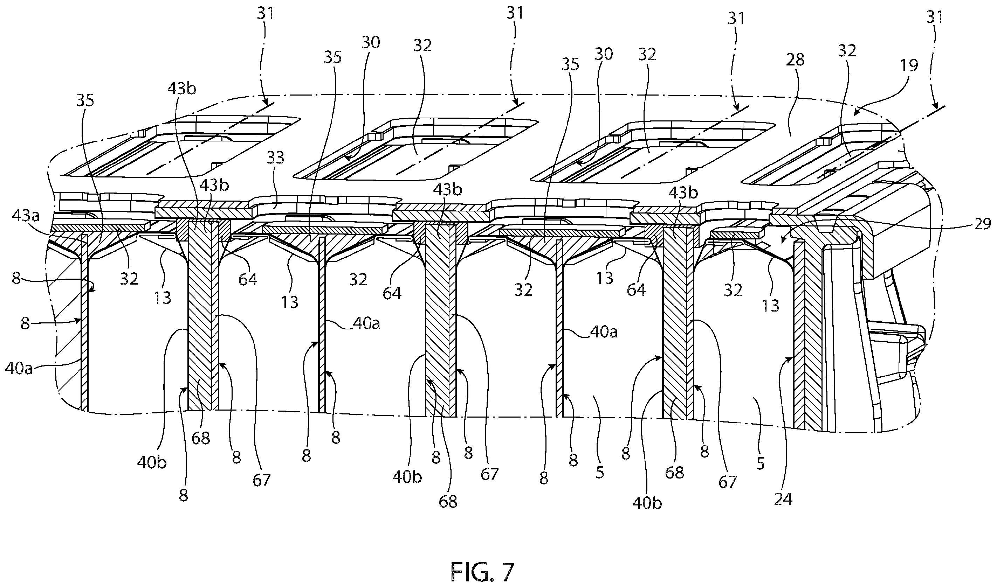

The cover plate 28 is substantially parallel to the base wall 20 and is spaced from the upper sides 13 of the pouch cells 5 along the vertical axis 4, as also visible in the enlargement of Figure 7, so as to ensure a gap at an upper end 29 of the housing 24.

Preferably the cover plate 28 has a plurality of openings 30, of the through type, so as to put the upper end 29 of the housing 24 in communication with an external environment, above the battery module 1. This external environment corresponds, in use, to an upper zone of the battery pack where the battery module 1 is installed.

Preferably, the openings 30 are aligned in directions parallel to the longitudinal axis 2 so as to form a series of longitudinal rows 31 of openings (Figure 1). In particular, each longitudinal row 31 of openings is on a respective pair of pouch cells 5. In the specific case shown, the two pouch cells 5 are which are arranged on opposed sides, along the plates 27 are an exception, as they have respective longitudinal rows 31 of openings, dedicated to them.

Still with reference to Figure 7, the openings 30 are provided to ensure the venting of any hot gases emitted by the pouch cells 5, from the upper end 29 of the housing 24 towards the external environment. Preferably, the passage for the hot gases to be vented through each opening 30 is chocked, i.e. partially obstructed, or is closed by a respective shutter element 32, which is vertically aligned, for example coaxial, with the corresponding opening 30. More preferably, each shutter element 32 is defined by a plate parallel to the cover plate 28.

In particular, each shutter element 32 is coupled in a fixed position on the two pouch cells 5 that are arranged below the corresponding opening 30. More in particular, the shutter elements 32 are arranged lower than the cover plate 28; in other words, they are inside the upper end 29 of the housing 24.

An annular slit may be present between the perimeter edge 33 of each opening 30 and the perimeter edge 34 of the corresponding shutter element 32, but this annular slit has an insufficient width for the passage of gases that are emitted into the housing 24 when the pouch cells 5 reach a condition of thermal instability.

At the same time, the shutter elements 32 are coupled to the upper sides 13 of the battery cells 5 so as to automatically detach upon reaching a critical operating condition, defined by design, for example upon reaching a given threshold temperature and/or a given internal pressure (in the upper end 29 of the housing 24), due to the gases emitted by the pouch cells 5 under conditions of thermal instability. When this critical operating condition is reached, the shutter elements 32 are configured so as to suddenly detach themselves from the pouch cells 5 and be automatically ejected through the respective openings 30, in order to fully open the same openings 30 and thus let the hot gases vent to the outside. In particular, this expulsion is due to the combination of high temperature and pressure values, which manage to break the coupling constraint of the shutter elements 32 on the upper side 13 of the pouch cells 5: more in particular, the shutter elements 32 are expelled upwards under the thrust of the gases.

Therefore, when the operating conditions of one or more pouch cells 5 become critical (due to thermal instability), a passage for venting hot gases opens up, and this passage is equal to the entire extension of the openings 30 at the detachment of the shutter elements 32 (i.e. precisely at the pouch cells 5 that have become critical).

The shape and dimensions of the perimeter edges 33 and 34 must be established by design so as to ensure this expulsion, without risks of interference or jammings (for example, the shutter elements 32 must be slightly smaller than the corresponding openings 30).

In practice, the set of openings 30 and of shutter elements 32 defines a set of valves which, under critical operating conditions (i.e. in the presence of thermal instability), perform a safety function by opening a passage for discharging the hot gases along a preferential direction, i.e. upwards. In this way, during use, the hot gases are quickly vented into the upper zone of the battery pack.

At the same time, for the pouch cells 5 that do not reach the critical operating condition, the corresponding shutter elements 32 remain in their standard position (attached on the upper sides 13 of the pouch cells 5) and continue to obstruct the corresponding openings 30, whereby they prevent the hot gases already vented to the outside from being able to re-enter the housing 24 (or, in any case, the amount of gas that can re-enter through the annular slit between the edges 33 and 34 is negligible, so it does not impair the thermal stability of the other pouch cells 5).

In order to achieve the automatic detachment of the shutter elements 32 in a relatively simple way, the latter are preferably fixed on the upper sides 13 of the pouch cells 5 by gluing, i.e. by an adhesive material 35, specifically chosen according to the trigger threshold that must define this detachment. The choice of the adhesive material 35, as well as the width of the glued zone and any other coupling parameters, can be chosen on the basis of simulations and/or experimental tests in order to obtain the detachment at the desired time.

With reference to Figure 6, the pouch cells 5 are alternated along the transverse axis 3 with a plurality of partitions, defined by flat walls, with rectangular perimeter, whose faces rest directly against the faces 8 of the pouch cells 5. In particular, the partitions are of two different types and are indicated respectively by 40a and 40b in the figures. The partitions 40a, in turn, alternate with the partitions 40b along the transverse axis 3.

The partitions 40a preferably have a heat conducting material, configured to transfer heat from the faces 8 of the pouch cells 5 towards the base wall 20. In fact, in use, at or below the base wall 20, a cooling system will be provided, for example a plate defining internal channels for a cooling liquid.

In particular, the partitions 40a comprise respective metal sheets, for example in aluminium, in direct contact with the faces 8. More in particular, each partition 40a consists of a single metal sheet.

The partitions 40b, on the other hand, perform a thermal barrier function, along the transverse axis 3. For this purpose, with reference to Figures 7-9, the partitions 40b comprise respective sheets 67 consisting of flame-guard material. The term "flame-guard material" means a refractory material, in particular a material resistant to temperatures greater than 900 °C and to direct contact with flames, for a period of time greater than 15 minutes, without interacting with other adjacent materials and retaining its integrity. For example, the sheet 67 comprises phlogopite mica to meet these requirements.

The partitions 40b further comprise respective sheets 68 which cover, at least partially, a face of the sheets 67 and are made of elastically deformable material, of known type, to hold the pouch cells 5 under compression along the transverse axis 3. In other words, each partition 40b consists of two layers, respectively defined by sheets 67 and 68.

As regards the partitions 40a, they have a lower edge 41a which is arranged on the base wall 20 and is preferably coupled to the latter in a fixed position by an adhesive material 42 (Figure 4), deposited for example in the form of a continuous layer. In particular, the adhesive material 42 extends longitudinally along the entire lower edge 41a.

Referring to Figure 7, the partitions 40a have a smaller height of the housing 24, so they do not engage its upper end 29. Preferably, each partition 40a is vertically aligned with at least one of the openings 30; more preferably, each partition 40a is vertically aligned with a respective longitudinal row 31 of openings. In more detail, each partition 40a has an upper edge 43a that extends upwards beyond the faces 8 (alongside the upper sides 13 of the pouch cells 5), so as to engage the adhesive material 35 and, therefore, perform a function of additional support for gluing the shutter elements 32. Not only that, but the upper edge 43a also has the function of a mechanical stop or strut, as it prevents the respective shutter element 32 from moving downwards and therefore increasing the passage section of the annular slit between the edges 33 and 34. In other words, since the upper side 13 of the pouch cells 5 is relatively soft, a more rigid structure, i.e. the partitions 40a, is used for the correct positioning and operation of the shutter elements 32.

The adhesive material 35 advantageously fills two zones on opposed sides of the upper edge 43a.

With reference to Figures 9 and 8, along the longitudinal axis 2 each partition 40a ends, towards the plate 25, with an edge 45a and, towards the plate 26, with an edge 46a. The edges 45a and 46a longitudinally extend beyond the faces 8 of the pouch cells 5 and are coupled to respective support elements 47a and 48a which, for example, extend over the entire height of the partitions 40a.

With reference to Figure 8, each of the support elements 48a defines a respective shoulder 49a, facing longitudinally towards the plate 26; at the same time, the terminal portions 17 of the tabs 16 rest longitudinally on the shoulders 49a.

The material of the shoulders 49a on the support elements 48a must be such as to support the tabs 16 during the welding operations performed for the electrical connection between the terminal portions 17 and, for example, is defined by metallic material.

As regards the plate 26 (Fig. 8), the latter is preferably of a multi-layer type and comprises a relatively rigid outer wall 55, in particular of metal (for example aluminium), coated by an intermediate layer 52, consisting of relatively flexible material, with mineral fibres to perform a thermal insulating function, and a layer of intumescent material 51, of a spongy or porous type, which in turn covers the layer 52 and defines an inner surface 50 of the plate 26 in the housing 24.

More preferably, the plate 26 is shaped so as to have, along the inner surface 50, vertical ribs 53 alternating transversely with vertical recesses 54.

At the opposed longitudinal end of the battery module 1, with reference to Figure 9, the plate 25 preferably has a structure similar to that just described for the plate 26; in particular, it comprises a relatively rigid outer wall 56, for example in thermosetting material SMC (sheet moulding compound), coated with a relatively flexible intermediate layer 62, with mineral fibres, in turn coated with a layer of intumescent material 57, which defines an inner surface 58 of the plate 25 in the housing 24.

In particular, the plate 25 is shaped so as to have, along the inner surface 58, vertical ribs 59 alternating transversely with vertical recesses 60.

In particular, the support elements 47a on the edges 45a define respective shoulders 61a, which face longitudinally towards the plate 25 and are arranged at the vertical recesses 60.

In the attached figures the parts that relate to the partitions 40b, and which match to those described above for the partitions 40a, are indicated by the same reference numbers, followed by letter b, instead of letter a.

As shown in Figure 9, for each partition 40b, the edge 46b, the support element 48b and the shoulder 49b face the plate 25 (Figure 9) and are gas-tightly coupled to its inner surface 58, with interposition of the terminal portions 17 of the tabs 16, over the entire height of the partition 40b and of the tabs 16 themselves. In detail, the terminal portions 17 remain longitudinally clamped between the shoulders 49b and the inner surface 58 of the plate 25 (in particular, at the vertical ribs 59). Specifically, the layer of intumescent material 57, increasing in volume with temperature during use, further seals the coupling between the plate 25 and the terminal portions 17 of the tabs 16.

In particular, the edge 46b, on which the support element 48b is mounted, consists solely of the sheet 67, i.e. it is not coated by the sheet 68.

At the same time, as shown in Figure 8, the edge 45b of the partitions 40b faces the plate 26 and is gas-tightly coupled to the inner surface 50 over the entire height of the partitions 40b (e.g. at the vertical recesses 54). Preferably, the edge 45b is coupled directly to the layer of intumescent material 51 of the plate 26, whereby the layer of intumescent material 51, increasing in volume with temperature during use, seals the coupling between the plate 26 and the edge 45b of the partitions 40b even better.

Accordingly, at the opposed longitudinal ends (i.e. along the edges 45b and 46b), the partitions 40b are gas-tightly coupled, directly or indirectly, with the inner surfaces 50 and 58 of the plates 25 and 26.

Preferably, the upper edges 43b of the partitions 40b (Figure 7) are also gas-tightly coupled to the cover plate 28, over the entire length of the housing 24, preferably by sealing material 64, deposited on the cover plate 28 itself, for example in the form of longitudinal beads.

Finally, the lower edge 41b of the partitions 40b (Figure 6) is placed on the base wall 20 and is gas-tightly coupled to the latter, e.g. by the adhesive material 42, over the entire length of the housing 24.

In this way, with reference to Figures 6 and 7, any hot gases emitted by each pouch cell 5 only outflow in the upper end 29 of the housing 24, i.e. upwards, and are then vented through the openings 30 as described above.

In addition, the partitions 40b define between them, along transverse axis 3, a series of compartments 66, each of which is isolated from the adjacent compartments 66, preferably along the entire perimeter (i.e. at the base wall 20, the cover plate 28 and the plates 25 and 26). In particular, each compartment 66 houses a respective pair of pouch cells 5 (except for the two opposed sides along the plates 27, where each compartment 66 has only one pouch cell 5).

Therefore, the venting hot gases emitted in a given compartment 66 are confined, and can only be vented in one specific direction, namely upwards in the upper end 29 of the housing 24. In other words, the propagation of the hot gases in the housing 24 along the transverse axis 3 is prevented.

Each compartment 66 then communicates with the external environment through at least one of the openings 30, and therefore it houses at least one corresponding shutter element 32, so as to let the hot gases escape to the outside. In particular, each compartment 66 communicates with the outside by a respective longitudinal row 31 of openings.

It is evident from the foregoing that the battery module 1 is capable of limiting the propagation of the hot gases in the housing 24 along the transverse direction 3 and defining a well-defined preferential direction for venting such hot gases, i.e. upwards, thanks to the tight coupling of the partitions 40b along at least part of their perimeter.

Then, thanks to the openings 30 it is allowed to the hot gases to outflow towards the external environment, again upwards, as if the battery module 1 were provided with safety valves. In particular, as mentioned above, the openings 30, with the respective shutter elements 32, contribute to keeping the compartments 66 isolated from the hot gases that have already been vented to the outside.

At the same time, the partitions 40b are advantageous for preventing heat transfer along the transverse axis 3.

Furthermore, the partitions 40a are advantageous for dissipating heat towards the base wall 20. The combination of the partitions 40a and 40b, in alternating positions, offers an optimal solution.

Other advantages are then evident to a technician in the field based on the above with reference to the attached drawings.

Finally, it is clear that modifications and variations may be made to the battery module 1 described and shown herein without departing from the protection scope of the present invention, as defined in the appended claims.

In particular, each compartment 66 could contain a different number of pouch cells 5, and/or the partitions 40a and/or 40b could be made of materials different from what is indicated above by way of example.

## Claims

1. Battery module (1) comprising:
- a casing (18) defining a housing (24) and comprising:
a) a base wall (20) and a cover plate (28) opposed to each other along a vertical direction (4);
b) a front plate (25) and a back plate (26), opposed to each other along a longitudinal direction (2), orthogonal to the vertical direction (4);
c) two side plates (27), opposite to each other along a transverse direction (3), orthogonal to the longitudinal direction (2) and vertical direction (4);
- a plurality of pouch cells (5) parallel to the longitudinal direction (2), arranged in a row along the transverse direction (3) and electrically connected to each other in series;
wherein said housing (24) is divided, along said transverse direction (3), into a plurality of compartments (28) by first partitions (40b) arranged between said pouch cells (5), and each said compartment (66) houses at least one respective pouch cell (5);
**characterized in that** said compartments (66) are gas-tightly insulated from each other at said base wall (20), at said front plate (25) and at said back plate (26).

2. The battery module according to claim 1, wherein said compartments (66) are also gas-tightly insulated from each other at said cover plate (28).

3. The battery module according to claim 2, wherein said first partitions (40b) comprise respective upper edges (43b), which are gas-tightly coupled to said cover plate (28) by beads of sealing material (64).

4. The battery module according to anyone of the previous claims, wherein at least some of said compartments (66) house, each, a respective pair of pouch cells (5).

5. The battery module according to anyone of the preceding claims, wherein said first partitions comprise, each, a respective first sheet (67) made of flame-guard material.

6. The battery module according to claim 5, wherein each of said first partitions (40b) has a respective second sheet (68) made of elastically deformable material, arranged at least on part of a face of said first sheet (67).

7. The battery module according to anyone of the previous claims, wherein said first partitions (40b) comprise respective side edges (45b, 46b), which are gas-tightly coupled, directly or indirectly, to said front and back plates by intumescent material.

8. The battery module according to claim 7, wherein said front and back plates have respective inner surfaces, longitudinally delimiting said housing and defined by respective layers of intumescent material.

9. The battery module according to claim 8, wherein said pouch cells (5) end with respective tabs (16) having terminal portions (17) that are fixed to terminal portions (17) of adjacent tabs (16), so as to define the electrical connection in series; and wherein said terminal portions (17) are gas-tightly coupled against one of said layers of intumescent material.

10. The battery module according to anyone of the preceding claims, wherein said casing further comprises second partitions (40a) arranged between said pouch cells (5), comprising respective lower edges coupled to said base wall (20) and having a heat conducting material arranged in contact with said pouch cells (5) and configured to transfer heat from said pouch cells (5) to said base wall (20).

11. The battery module according to claim 10, wherein said second partitions (40a) comprise respective metal sheets.

12. The battery module according to claim 10 or 11, wherein said first partitions (40b) and second partitions (40a) are in alternating positions along said transverse direction (3) .

13. The battery module according to anyone of the preceding claims, wherein said cover plate (28) has at least one through-opening (30) for each of said compartments (66), so as to put said compartments (66) in communication with an external environment.

14. The battery module according to claim 13, wherein each said through-opening (30) is at least partially closed by a respective shutter element (32) coupled to said pouch cells (5) so as to detach upon reaching a critical operating condition and, consequently, to be automatically ejected through the corresponding through-opening (30).

15. The battery module according to claim 14, wherein said shutter elements (32) are supported by second partitions (40a) arranged between said pouch cells (5).
